# EUROPÄISCHE PATENTSCHRIFT

(11) **EP 0 685 362 B1**
(45) Veröffentlichungstag und Bekanntmachung des Hinweises auf die Patenterteilung: **05.08.1998**
(21) Anmeldenummer: 95201299.5
(22) Anmeldetag: 18.05.1995
(51) Int. Cl.: B60P 7/08, B61D 45/00

(54) **Bodenring**
Tie-down assembly
Anneau d'amarrage

(30) Priorität: 31.05.1994 BE 9400542
(43) Veröffentlichungstag der Anmeldung: 06.12.1995
(73) Patentinhaber: N.V. HENSCHEL ENGINEERING S.A., B-2610 Wilrijk (BE)
(72) Erfinder: Patt, Frank, D-42859 Remscheid (DE)
(74) Vertreter: Donné, Eddy

(56) Entgegenhaltungen:
- WO-A-91/04883
- US-A- 3 412 693
- US-A- 4 907 921
- US-A- 5 052 869

## Beschreibung

Diese Erfindung betrifft einen Bodenring des Typs, der gebildet wird durch eine Basisplatte, die zweckmässig in einem Ladeboden oder dergleichen befestigt werden kann, wobei diese Basisplatte mit einem vertieften Teil versehen ist, in die ein Ring zur Befestigung von Gütern oder dergleichen sich einpasst, wobei die Basisplatte in der Öffnung des Rings mit einem erhöhten Teil versehen ist.

Solch ein Bodenring wird in allgemeinen im Boden eines Land- oder Wasserfahrzeugs befestigt, und der Ring dien dazu, Lasten oder dergleichen zu befestigen, um das Bewegen dieser Lasten oder dergleichen während der Fortbewegung des Land- oder Wasserfahrzeugs zu verhindern.

Ein solcher Ring ist aus WO-A-91/04883 bekannt. Bei diesem Ring ist die Basisplatte, an der Stelle der Befestigung des Rings an der Basisplatte, mit einem relativ schmalen Vorsprung versehen, dessen oberster Teil weit unter der oberen Wand der Basisplatte gelegen ist, so dass der Ring noch eine innere Öffnung aufweist, in die diese Räder gelangen können, wobei, abhängig vom Durchmesser dieser Räder, letztere durch den vorgenannten Ring behindert werden und sich darin festsetzen können, wenn man es mit kleinen Rädern zu tun hat, und mindestens die Lenkbarkeit eines betreffenden Karrens hindern und einen beträchtlichen Lärm verursachen können.

Die vorliegende Erfindung hat dann auch einen Bodenring des vorgenannten Typs zum Gegenstand, wobei Vorsehungen getroffen wurden, die verhindern, dass die Räder von Karren oder dergleichen, die über einen solchen Bodenring bewegt werden, durch die Öffnung des vorgenannten Ringes des Bodenrings gehindert werden.

Zu diesem Zweck ist gemäß der vorliegenden Erfindung der erhöhte Teil in der Ebene der oberen Wand der vorgenannten Basisplatte gelegen, wodurch man erreicht, daß die Bewegung eines Rads eines Karrens oder dergleichen über einen Bodenring gemäß der Erfindung ohne große Behinderung erfolgt, wodurch die Lenkbarkeit des Karrens maximal bleibt und Lärm auf ein Minimum beschränkt bleibt.

Mit der Absicht, die Merkmale der Erfindung besser darzustellen, ist hiernach, als Beispiel ohne jeden einschränkenden Charakter, eine bevorzugte Ausführungsform eines Bodenrings beschrieben, unter Verweis auf die beigefügten Zeichnungen, worin:
Figur 1 eine Perspektivansicht eines Bodenrings gemäß der Erfindung, in einem Ladeboden befestigt, darstellt;
Figur 2 einen Querschnitt gemäß Linie II-II in Figur 1 darstellt.

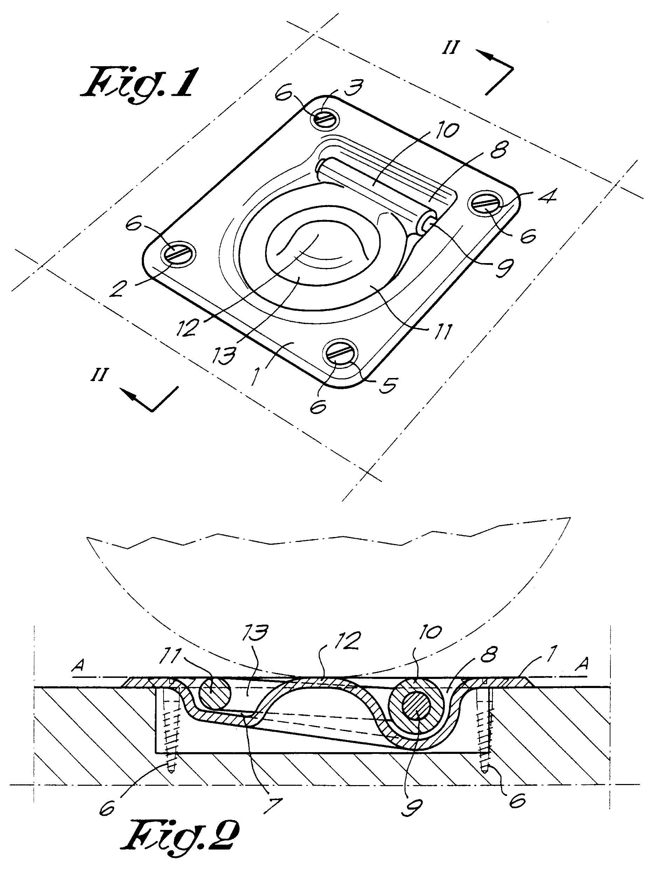

Der Bodenring gemäß der Erfindung besteht in der Hauptsache aus einer Basisplatte 1 mit quadratischer Form, worin, in jeder Ecke, eine Öffnung 2-3-4-5 angebracht ist, wobei diese Öffnungen konisch ausgeführt sind, so daß der Senkkopf eines Bolzens, einer Holzschraube 6 oder dergleichen versenkt darin angebracht werden kann.

In der Tat wird der vorgenannte Bodenring, abhängig von den Kräften, die darauf ausgeübt werden sollen, mittels eines Bolzens, der den Boden durchquert und unter dem Boden mittels einer Mutter fixiert wird, oder im Fall leichter Lasten mittels einer Holzschraube, wie in der Zeichnung angedeutet, am Boden befestigt werden.

Der Bodenring weist einen vertieften Teil 7 auf, der in der Hauptsache zylindrisch ist, mit, nach einer Seite der Basisplatte 1 zu, einer Verbreiterung 8, worin eine Achse 9 vorgesehen ist.

Um die vorgenannte Achse 9 herum ist die Basis 10 eines Rings 11 frei drehbar angebracht, wobei dieser Ring 11 sich so in den vertieften Teil einpaßt und eine solche Abmessung aufweist, daß das Oberteil dieses Rings 11 wie auch das Oberteil der Basis 10 hiervon über den größten Teil mit der oberen Ebene A-A der Basisplatte 1 zusammenfällt.

Gemäß der vorliegenden Erfindung ist der vertiefte Teil 7 nahezu ringförmig ausgeführt, wobei in der Öffnung des Rings 11 ein erhöhter Teil 12 vorgesehen ist, dessen Oberteil ebenfalls mit der oberen Ebene A-A der Basisplatte 1 zusammenfällt.

Zwischen der zylindrischen Öffnung des Rings 11 und der Kreisform des erhöhten Teils 12 wird ein zweckmäßiger, möglichst kleiner Raum 13 beibehalten, der gestattet, daß der Ring 11 auf einfache Weise um die Achse 9 nach oben geschwenkt werden kann.

Es ist deutlich, daß man auf diese Weise einen Bodenring erhält, wobei nicht nur der größte Teil des oberen Teils des Rings 11 und des Basisteils 10 dieses Rings 11 in der oberen Ebene A-A der Basisplatte 1 liegt, wobei jedoch gleichzeitig in der Öffnung des Rings 11 ein erhöhter Teil 12 vorgesehen ist, wovon der obere Teil ebenfalls in der Ebene A-A gelegen ist, derart, daß das Verfahren von Karren oder dergleichen über einen solchen Bodenring sehr wenig Behinderung von solchen Bodenringen erfährt, in Anbetracht dessen, daß die Räder solcher Karren oder dergleichen nicht mehr in die Öffnung des Rings 11 geraten können, sich jedoch einfach über die Basisplatte 1, den Ring 11 mit Basisteil 10 und den erhöhten Teil 12 bewegen.

## Patentansprüche

1. Bodenring des Typs, der gebildet wird durch eine Basisplatte (1), die zweckmäßig in einem Ladeboden oder dergleichen befestigt werden kann, wobei diese Basisplatte mit einem vertieften Teil (7) versehen ist, in die ein Ring (11) zur Befestigung von Gütern oder dergleichen sich einpaßt, wobei die Basisplatte (1) in der Öffnung des Rings (11) mit einem erhöhten Teil (12) versehen ist, dadurch gekennzeichnet, daß der obere Teil des erhöhten Teils (12) in der Ebene A-A der oberen Wand der Basisplatte (1) gelegen ist.

2. Bodenring gemäß Anspruch 1, dadurch gekennzeichnet, daß mindestens ein Teil des oberen Teils des Rings (11) wie auch das obere Teil der Basis (10) des Rings (11) sich ebenfalls in der Ebene A-A der Basisplatte (1) befinden.

3. Bodenring gemaß Anspruch 1 oder 2, dadurch gekennzeichnet, daß zwischen dem erhöhten Teil (12) und dem darum herum befindlichen Ring (11) ein Raum (13) beibehalten wird, der gestattet, den Ring (11) zu greifen.

## Claims

1. Tie-down ring of the type formed by a base plate (1) which can be attached in an appropriate manner in a loading floor or similar, whereby this base plate is provided with a deepened part (7) into which fits a ring (11) for the attachment of goods or similar, whereby the base plate (1), in the opening of the ring (11), is provided with an elevated part (12), characterized in that the upper part of the elevated part (12) is situated in the plane A-A of the upper wall of the base plate (1).

2. Tie-down ring according to claim 1, characterized in that at least a part of the upper part of the ring (11), as well as the upper part of the base (10) of the ring (11), is also situated in the plane A-A of the base plate (1).

3. Tie-down ring according to claim 1 or 2, characterized in that, between the elevated part (12) and the ring (11) situated around it, a space (13) is maintained which allows to grip the ring (11).

## Revendications

1. Anneau d'amarrage au sol du type qui est formé par une plaque de base (1) qui peut être fixée de manière avantageuse dans le sol d'un entrepôt ou analogues, cette plaque de base étant munie d'une partie renfoncée (7) dans laquelle vient s'insérer un anneau (11) pour fixer des marchandises ou analogues, la plaque de base (1) étant munie, dans l'ouverture de l'anneau (11), d'une partie surélevée (12), caractérisé en ce que la partie supérieure de la partie surélevée (12) est située dans le plan A-A de la paroi supérieure de la plaque de base (1).

2. Anneau d'amarrage au sol selon la revendication 1, caractérisé en ce qu'au moins une partie de la partie supérieure de l'anneau (11), au même titre que la partie supérieure de la base (10) de l'anneau (11), se trouve également dans le plan A-A de la plaque de base (1).

3. Anneau d'amarrage au sol selon la revendication 1 ou 2, caractérisé en ce qu'entre la partie surélevée (12) et l'anneau (11) qui l'entoure, est ménagé un espace (13) qui permet de saisir l'anneau (11).
